# EUROPEAN PATENT APPLICATION

(11) **EP 1 329 654 A2**
(43) Date of publication of application: **23.07.2003**
(21) Application number: 03000057.4
(22) Date of filing: 07.01.2003
(51) Int. Cl.: F16K 1/12

(54) **Safety valve, particularly for closing supply ducts of faucets of hygienic and sanitary units**

(30) Priority: 22.01.2002 IT MI20020109
(71) Applicant: Valpra by Rossi S.r.l., 28024 Gozzano (Prov. of Novara) (IT)
(72) Inventor: Rossi, Riccardo, 28024 Gozzano (Novara) (IT)
(74) Representative: Modiano, Guido, Dr.-Ing.

(57) **Abstract**

A safety valve comprising a valve body (2) inside which a substantially cylindrical chamber (3) is provided that is connected to an inlet (4), formed at a first axial end (3a) of the chamber (3), and to an outlet (5), formed in a region that lies between the axial ends (3a, 3b) of the chamber (3) and is orientated transversely to the axis (6) of the chamber (3). A sealing seat (8) for a flow control element (9) is formed in the chamber (3), in a region between the inlet (4) and the outlet (5), and the flow control element (9) can move on command along the axis (6) of the chamber (3) and is connected to an actuation shaft (10), which is orientated so that its axis is parallel to the axis (6) of the chamber (3) and protrudes from the second axial end (3b) of the chamber (3) that lies opposite the first axial end (3a). At least at the outlet (5), in the chamber (3), there is a filter (11), and the second end (3b) of the chamber is closed by a plug (12) that is crossed by the shaft (10) and can be removed in order to insert or extract said filter (11) in or from the chamber (3). The shaft (10) and the valve body (2) are mutually connected by coupling means (13), which are independent of the plug (12).

## Description

The present invention relates to a safety valve particularly for closing supply ducts of faucets of hygienic and sanitary units.

As is known, safety valves are arranged on the supply ducts of water faucets of hygienic and sanitary units in order to close such ducts.

These safety valves are generally arranged in the immediate vicinity of the hygienic and sanitary units, for example in the lower rear region of a washbasin or bidet, and therefore must be particularly compact, both to avoid complicating the installation of the hygienic and sanitary unit and to avoid making their presence too conspicuous. Said valves, moreover, must have a particularly simple structure, so that they can be manufactured at low costs.

One type of these safety valves is constituted by a valve body in which there is a substantially cylindrical chamber, which is connected to an inlet formed at an axial end of the chamber and to an outlet that is orientated transversely to the axis of the chamber and is formed in a region that lies between the two axial ends of the chamber. A sealing seat for a flow control element is formed between the inlet and the outlet; said flow control element can move along the axis of the chamber and is connected to an actuation knob, which is arranged at the end of the valve body that lies opposite the inlet.

More particularly, the flow control element is constituted by the axial end of a shaft arranged coaxially in said chamber and passes through a plug or bonnet that is arranged so as to close the axial end of the chamber that lies opposite the inlet. The shaft, whose axial end that lies opposite the flow control element is connected to the actuation knob, is coupled, by way of a threaded intermediate portion, to a threaded hole that passes through the plug or bonnet so that a rotation of the knob, and therefore of the shaft, about its own axis causes an axial translational motion of the shaft, with a consequent movement of the flow control element toward or away from the sealing seat in order to close or open the valve.

The outlet is formed at a transverse wing of the valve body.

This type of valve has a rather simple structure and small dimensions; its aesthetic styling is also simple, but this type of valve has the drawback that it cannot accommodate in said chamber a filter that effectively retains any foreign objects in the flow of the water from the inlet to the outlet in order to prevent damage to the faucet.

Theoretically, a filter might be provided in said chamber, but cleaning such filter would entail disassembling the valve without being able to keep it closed.

Another type of these safety valves comprises a valve body in which a chamber is provided, which is composed of two substantially cylindrical portions, with axes that are parallel to each other, but offset.

The first cylindrical portion is connected to an inlet at one of its axial ends, and in the region where the two cylindrical portions join there is a 90° connecting wing in which there is a sealing seat that can be engaged by a flow control element that can move on command along the axis of the connecting wing.

The second cylindrical portion, besides being connected at one of its axial ends to the connecting wing, is connected to an outlet located in an intermediate region of its axial extension. The other axial end of the second cylindrical portion is closed by a plug that can be removed in order to allow the extraction and insertion of a filter, which is supported by said plug.

This type of safety valve has the advantage of being provided with a filter that can be removed while the valve is closed, therefore without having to disassemble the valve.

However, this valve has a more complex. structure than the one described here above.

Furthermore, this second type of valve has a relatively complicated aesthetic styling, which arises from the presence of two lateral branches, one of which accommodates the flow control element, the other branch being located at the outlet, and such styling is often not welcome.

The aim of the present invention is to solve the problems mentioned above, by providing a safety valve provided with a filter that can be removed when the valve is closed and has an extremely simple structure.

Within this aim, an object of the invention is to provide a safety valve that can be compact and can have a simple aesthetic styling.

Another object of the invention is to provide a safety valve that can be manufactured at competitive costs.

This aim and these and other objects that will become better apparent hereinafter are achieved by a safety valve, particularly for closing supply ducts of faucets of hygienic and sanitary units, comprising a valve body inside which a substantially cylindrical chamber is provided that is connected to an inlet, which is formed at a first axial end of said chamber, and to an outlet, which is formed in a region that lies between the axial ends of said chamber and is orientated transversely to the axis of said chamber; a sealing seat for a flow control element being formed in said chamber in a region between said inlet and said outlet, said flow control element being movable on command along the axis of said chamber and being connected to an actuation shaft, which is orientated so that its axis is parallel to the axis of said chamber and protrudes from a second axial end of said chamber that lies opposite said first axial end, characterized in that at least at said outlet, in said chamber, a filter is provided, and in that said second end of the chamber is closed by a plug that is crossed by said shaft and can be removed in order to insert or extract said filter in or from said chamber, means for coupling said shaft to said valve body being provided, said coupling means being independent of said plug.

Further characteristics and advantages of the invention will become better apparent from the description of three preferred but not exclusive embodiments of the valve according to the invention, illustrated only by way of non-limitative example in the accompanying drawings, wherein:

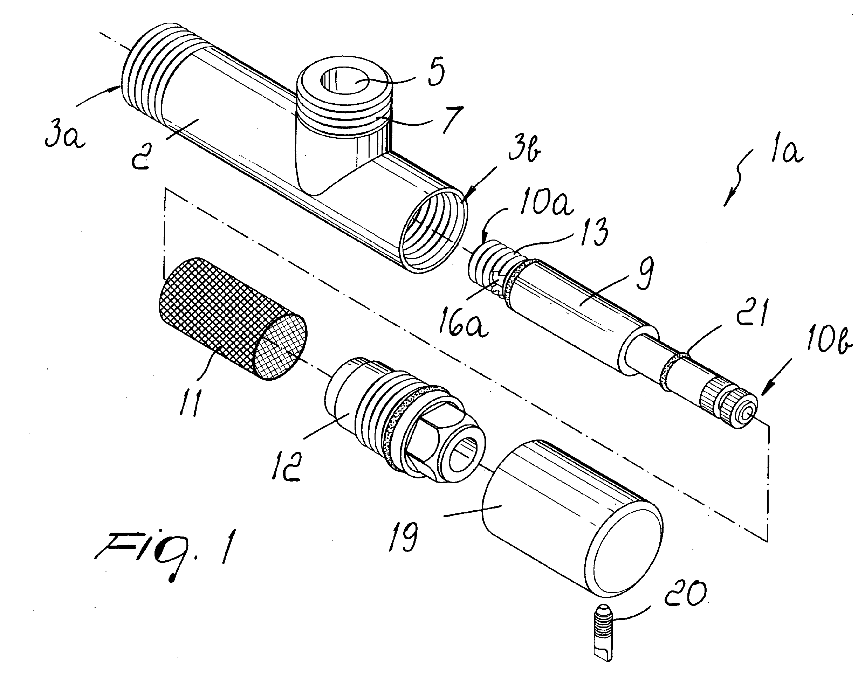

Figure 1 is an exploded perspective view of the valve according to the invention in a first embodiment;

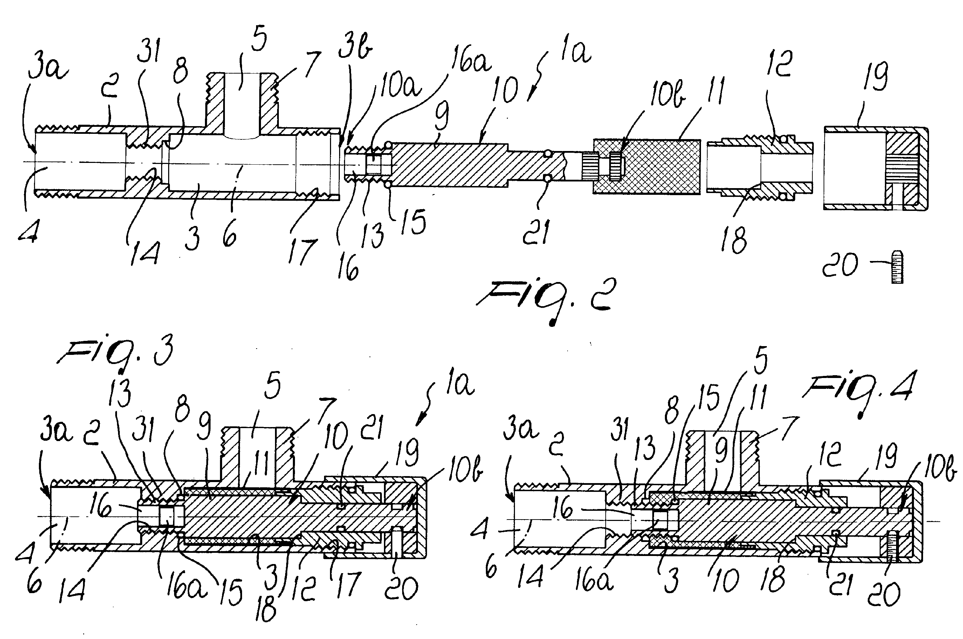

Figure 2 is an exploded axial sectional view of the valve of Figure 1;
Figure 3 is an axial sectional view of the valve of Figures 1 and 2 in the closed position;

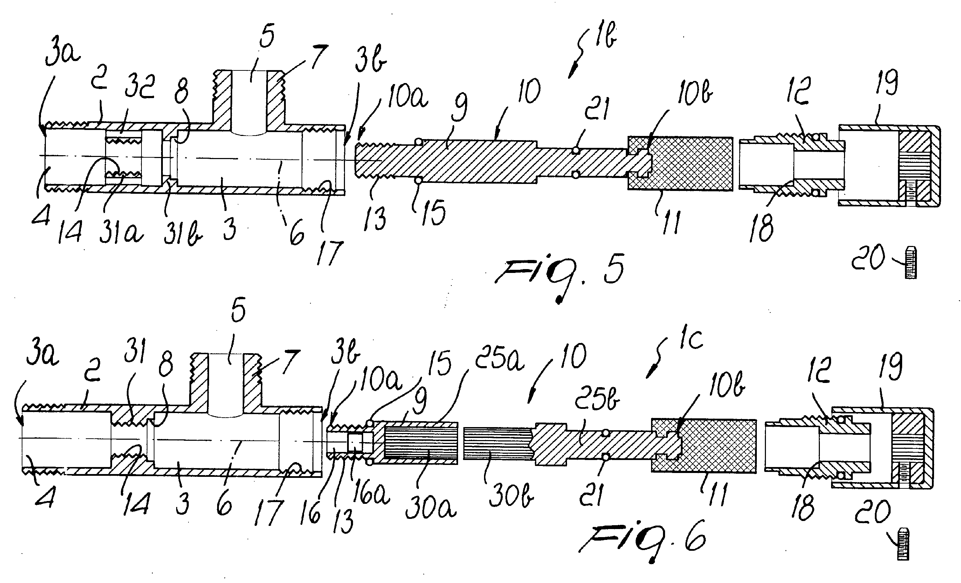

Figure 4 is an axial sectional view of the valve of Figures 1 and 2 in the open position;
Figure 5 is an exploded axial sectional view of the valve according to the invention in a second embodiment;
Figure 6 is an exploded axial sectional view of the valve according to the invention in a third embodiment.

With reference to the figures, the valve according to the invention, generally designated by the reference numerals 1a, 1b, 1c in its various embodiments, comprises a valve body 2 in which there is a substantially cylindrical chamber 3 that is connected to an inlet 4 and to an outlet 5.

The inlet 4 is formed at a first axial end 3a of the chamber 3, while the outlet 5 is formed in a region that lies between the two axial ends 3a and 3b of the chamber 3 and is orientated transversely to the axis 6 of the chamber 3 at a transverse branch 7 of the valve body 2.

In the chamber 3, in a region that lies between the inlet 4 and the outlet 5, there is a sealing seat 8 for a flow control element 9, which can move on command along the axis 6 of the chamber 3 and is connected to an actuation shaft 10.

The actuation shaft 10 is orientated so that its axis is parallel to the axis 6 and protrudes from the second axial end 3b of the chamber 3 that lies opposite the first axial end 3a at which the inlet 4 is formed.

According to the invention, there is a filter 11 in the chamber 3 at least at the outlet 5, and the second end 3b of the chamber 3 is closed by a plug 12, which is crossed by the shaft 10 and can be removed in order to allow the insertion or removal of the filter 11 in or from the chamber 3; the valve according to the invention is further provided with means for coupling the shaft 10 to the valve body 2 that are independent of the plug 12, so as to allow to remove or insert the filter 11 while the valve is closed.

Said coupling means comprises a threaded portion 13 of the shaft 10, which protrudes into the chamber 3 between the sealing seat 8 and the inlet 4 and is coupled to a threaded seat 14 formed in a portion of the valve body 2 that is internal to the chamber 3.

The shaft 10 can rotate about its own axis, which preferably coincides with the axis 6, in order to obtain, as a consequence of the threaded coupling of the threaded portion 13 of the shaft 10 with the threaded seat 14, an axial movement of the shaft 10 jointly with the flow control element 9 in order to produce the engagement or disengagement of the flow control element 9 with respect to the sealing seat 8.

The sealing seat 8 is constituted by an annular sealing region, which is arranged coaxially in the chamber 3 and can engage or disengage an annular sealing gasket 15, supported by the flow control element 9, as a consequence of the movement of the flow control element 9 along the axis 6 of the chamber 3.

Preferably, the flow control element 9 is constituted by a region of the shaft 10 that is provided with the gasket 15.

The threaded portion 13 is formed at a first axial end 10a of the shaft 10 that is directed toward the first axial end 3a of the chamber 3, i.e., toward the inlet 4. The threaded seat 14 is formed in an annular block 31, which is rigidly coupled to the side walls of the chamber 3 and is arranged between the inlet 4 and the sealing seat 8. Preferably, the annular block 31 in which the threaded seat 14 is formed is provided monolithically with the valve body 2.

In the first and second embodiments, the threaded seat 14 and the sealing seat 8 are close one another, since they are formed in a same annular block 31 that is formed monolithically with the valve body 2. The threaded seat 14 passes axially through the annular block 31, and in the shaft 10, in the region that lies between its first axial end 10a and the region that leads to the flow control element 9 with the gasket 15, there is at least one axial passage 16 with an outlet 16a located between the first end 10a of the shaft 10 and the gasket 15, in order to allow the water, when the valve is open, to flow from the inlet 4 to the outlet 5 regardless of the engagement between the threaded portion 13 and the threaded seat 14.

In the second embodiment, shown in Figure 5, the threaded seat 14 is formed in a first annular block 31a, which is rigidly coupled to the side walls of the chamber 3 (and is preferably monolithic with the valve body 2), and the sealing seat 8 is formed in a second annular block 31b, which is rigidly coupled to the side walls of the chamber 3 (and is preferably likewise monolithic with the valve body 2). The first annular block 31a is crossed by at least one passage 32 in order to ensure the hydraulic connection between the regions of the chamber 3 that are divided by the first annular block 31a regardless of the engagement of the threaded portion 13 of the shaft 10 with the threaded seat 14. In this second embodiment, therefore, the passage 16 is not necessary.

The plug 12 comprises a threaded sleeve or bonnet, which engages a thread 17, which is formed in the valve body 2 at the second end 3b of the chamber 3 and is coaxial to the chamber 3. The plug 12 is crossed by the second axial end 10b of the shaft 10 that lies opposite the first axial end 10a, and can be disengaged from the valve body 2 in order to open the second axial end 3b of the chamber 3.

The filter 11 has a tubular shape and is mounted on the plug 12. The filter 11, with the plug 12 connected to the valve body 2, is extended from said plug 12 to the annular block 31 or 31b in which the sealing seat 8 is provided.

The plug 12 defines an axial shoulder 18, which limits the possibility of axial movement of the flow control element 9, jointly with the shaft 10, away from the sealing seat 8.

The second end 10b of the shaft 10, arranged outside the chamber 3, is connected to an actuation knob 19.

The knob 19 is connected to said second axial end 10b of the shaft 10 by means of a splined- or polygonal-profile coupling, and is locked axially thereon by means of a grub screw 20, which can be removed to disengage the knob 19 from the shaft 10.

In the condition in which the knob 19 engages the shaft 10, said knob covers the region of the threaded sleeve of the plug 12 that protrudes from the valve body 2 and is generally polygonal in order to allow screwing or unscrewing of the threaded sleeve 12 by means of a suitable wrench.

A sealing gasket 21 is conveniently arranged between the shaft 10 and the threaded body 12.

Preferably, the chamber 3, the sealing seat 8, the threaded seat 14, the shaft 10 and the plug 12 are coaxial.

In the third embodiment, shown in Figure 6, the shaft 10 is provided in two parts, designated respectively by the reference numerals 25a and 25b, which are mutually coupled axially by way of a splined-profile coupling 30a and 30b. In this manner, the two parts 25a and 25b are mutually rigidly coupled in rotating about the axis of the shaft 10, but can slide with respect to each other in an axial direction, as will become better apparent hereinafter.

The particular arrangement of the elements that compose the safety valve according to the invention allows to obtain, for the valve body, a substantially cylindrical outer shape with a single lateral branch 7.

The safety valve according to the invention is designed to be arranged along the supply duct of a faucet of hygienic and sanitary units, by associating the end of the valve body 2 that has the outlet 4 with a portion of said feed duct and by associating the lateral branch 7 with the other portion of said supply duct, in a per se known manner.

The operation of the valve according to the invention is as follows.

In all the embodiments, a rotation of the knob 19 causes, as a consequence of the coupling of the threaded portion 13 with the threaded seat 14, an axial translational motion in one direction or the other of the shaft 10 and therefore of the flow control element 9, with consequent engagement or disengagement of the gasket 15 with respect to the sealing seat 8 in order to close or open the valve.

When the valve is in the open position, water flows from the inlet 4 to the outlet 5, passing through the filter 11, which retains any solid or semisolid matter and therefore protects the faucet from damage.

When it is necessary to clean or replace the filter 11, after engaging the flow control element 9 with the sealing seat 8 by acting on the knob 19, one proceeds as follows.

In the first and second embodiments, the grub screw 20 is removed and the knob 19 is disengaged from the shaft 10. Then the plug 12 is removed, extracting the filter 11, which is fitted on said plug 12.

After replacing or cleaning the filter 11, the plug 12 with the filter 11 fitted thereto is again coupled to the thread 17, and the knob 19 is fixed to the axial end 10b of the shaft 10 in order to allow again to use the safety valve.

It should be noted that during the cleaning or replacement of the filter 11 the valve remains safely closed due to the threaded coupling between the threaded portion 13 and the threaded seat 14.

In the third embodiment, before disengaging the knob 19 from the shaft 10, the knob 19 is pulled so as to disengage the part 25b from the part 25a of the shaft 10 and expose the region of the plug 12 that must be engaged by the wrench in order to unscrew it.

At this point one proceeds in the same manner described with reference to the other embodiments, removing the plug 12 and cleaning or replacing the filter 11. Once the replacement of the filter 11 has been completed, the plug 12 is engaged again with the valve body 2 by providing, inside the sleeve 12, the part 25b of the shaft 10, which will then be engaged again with the knob 19 and with the part 25a of the shaft 10 in order to restore the assembly of the valve according to the invention.

In this third embodiment also, during cleaning or replacement of the filter 11, the valve remains safely closed due to the coupling between the threaded portion 13 and the threaded seat 14.

In practice it has been found that the valve according to the invention fully achieves the intended aim, since thanks to its particular structure and arrangement of components it is capable of accommodating a filter that can be removed from the valve body during cleaning or replacement without having to renounce the closure of the supply duct on which the valve is placed, and at the same time allows to have, for the valve body, an extremely simple aesthetic styling as well as compact dimensions.

The valve thus conceived is susceptible of numerous modifications and variations, all of which are within the scope of the appended claims, even if details are replaced with other technically equivalent elements.

In practice, the materials used, as well as the dimensions, may be any according to requirements and to the state of the art.

The disclosures in Italian Patent Application No. MI2002A000109 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A safety valve, particularly for closing the supply ducts of faucets of hygienic and sanitary units, comprising a valve body (2) inside which a substantially cylindrical chamber (3) is provided that is connected to an inlet (4), which is formed at a first axial end (3a) of said chamber (3), and to an outlet (5), which is formed in a region that lies between the axial ends (3a, 3b) of said chamber (3) and is orientated transversely to the axis (6) of said chamber (3); a sealing seat (8) for a flow control element (9) being formed in said chamber (3) in a region between said inlet (4) and said outlet (5), said flow control element (9) being movable on command along the axis (6) of said chamber (3) and being connected to an actuation shaft (10), which is orientated so that its axis is parallel to the axis (6) of said chamber (3) and protrudes from the second axial end (3b) of said chamber (3) that lies opposite said first axial end (3a), **characterized in that** at least at said outlet (5), in said chamber (3), a filter (11) is provided, and **in that** said second end (3b) of the chamber (3) is closed by a plug (12) that is crossed by said shaft (10) and can be removed in order to insert or extract said filter (11) in or from said chamber (3), means for coupling (13) said shaft (10) to said valve body (2) being provided, said coupling means (13) being independent of said plug (12).

2. The valve according to claim 1, **characterized in that** said coupling means comprise a threaded portion (13) of said shaft (10) which protrudes into said chamber (3) between said sealing seat (8) and said inlet (4) and is coupled to a threaded seat (14) formed in a portion of said valve body (2) that lies inside said chamber (3); said shaft (10) being mounted so as to rotate about its own axis for an axial movement of said shaft (10) jointly with said flow control element (9), for the engagement or disengagement of said flow control element (9) with respect to said sealing seat (8), following the threaded coupling of said threaded portion (13) of the shaft (10) with said threaded seat (14).

3. The valve according to claim 1, **characterized in that** said sealing seat (8) is constituted by an annular sealing region, which is arranged coaxially in said chamber (3) and can be engaged or disengaged with respect to an annular sealing gasket (15) supported by said flow control element (9) as a consequence of the movement of said flow control element (9) along the axis (6) of said chamber (3).

4. The valve according to one or more of the preceding claims, **characterized in that** said threaded portion (13) of said shaft (10) is formed at a first axial end (10a) of the shaft (10) that is directed toward said first axial end (3a) of the chamber (3): said threaded seat (14) being formed in an annular block (31) that is rigidly coupled to the side walls of said chamber (3) and is arranged between said inlet (4) and said sealing seat (8).

5. The valve according to claims 1-3, **characterized in that** said threaded seat (14) is formed in a first annular block (31a), which is rigidly coupled to the side walls of said chamber (3), and said annular sealing seat (8) is formed in a second annular block (31b), which is rigidly coupled to the side walls of said chamber (3); said first annular block (31) being crossed by at least one passage (32) for hydraulic connection between the regions of said chamber (3) that are divided by said first annular block (31a) regardless of the engagement of said threaded portion (13) of the shaft (10) with said threaded seat (14).

6. The valve according to one or more of the preceding claims, **characterized in that** said threaded seat (14) and said annular sealing seat (8) are formed on a same annular block (31) that is rigidly coupled to the side walls of said chamber (3); said threaded seat (14) passing axially through said annular block (31), said shaft (10) having, in the region comprised between its first axial end (10a) and the region provided with said flow control element (9) with said annular sealing gasket (15), at least one passage (16) with an outlet (16a) located between said first shaft end (10a) and said annular sealing gasket (15).

7. The valve according to one or more of the preceding claims, **characterized in that** said plug (12) comprises a threaded sleeve or bonnet, which engages a thread (17) formed in said second axial end (3b) of the chamber (3) and is coaxial to said chamber (3); said threaded sleeve being crossed by the second axial end (10b) of said shaft (10) that lies opposite said first axial end (10a), and being disengageable from said valve body (2) in order to open said second axial end (3b) of the chamber (3).

8. The valve according to one or more of the preceding claims, **characterized in that** said filter (11) is tubular and is mounted on said threaded sleeve of the plug (12); said filter (11), when said threaded sleeve is connected to said valve body (2) , being extended from said threaded sleeve to the annular block (31, 31b) with said sealing seat (8) formed therein.

9. The valve according to one or more of the preceding claims, **characterized in that** said flow control element (9) is formed monolithically with said shaft (10).

10. The valve according to one or more of the preceding claims, **characterized in that** said threaded sleeve of the plug (12) forms an axial shoulder (18) that limits the possibility of axial movement of said flow control element (9), jointly with said shaft (10), away from said sealing seat (8).

11. The valve according to one or more of the preceding claims, **characterized in that** said second axial end of (10b) the shaft (10), arranged outside said chamber (3), is connected to an actuation knob (19).

12. The valve according to one or more of the preceding claims, **characterized in that** said actuation knob (19), in the condition for engaging said shaft (10), covers the region of said threaded sleeve of the plug (12) that protrudes from the body (2) of the valve.

13. The valve according to one or more of the preceding claims, **characterized in that** said knob (19) is connected to said second axial end (10b) of the shaft (10) by way of a splined- or polygonal-profile coupling and is locked axially thereon by way of a removable grub screw (20).

14. The valve according to one or more of the preceding claims, **characterized in that** said shaft (10) is formed in two parts, respectively a first part (25a), which supports said flow control element (9) with said sealing gasket (15), and a second part (25b), which is connected to said actuation knob (19), said first and second parts (25a, 25b) being mutually coupled coaxially by way of a splined- or polygonal-profile coupling (30a, 30b), said second part (25b) being rigidly coupled for rotation about its own axis to said first part (25a) and being axially movable with respect to said first part (25a).

15. The valve according to one or more of the preceding claims, **characterized in that** a sealing gasket (15) is arranged between said shaft (10) and said threaded sleeve of the plug (12).

16. The valve according to one or more of the preceding claims, **characterized in that** said valve body (2) is provided externally with a cylindrical shape with a lateral branch (7) at said outlet (5).

17. The valve according to one or more of the preceding claims, **characterized in that** said chamber (3), said annular sealing seat (8), said threaded seat (14), said shaft (10) and said threaded sleeve of the plug (12) are coaxial.
